# EUROPEAN PATENT SPECIFICATION

(11) **EP 4 089 535 B1**
(45) Date of publication and mention of the grant of the patent: **11.02.2026**
(21) Application number: 22171017.1
(22) Date of filing: 29.04.2022
(51) Int. Cl.: G06F 9/50, G06F 15/78, F02C 9/00

(54) **GAS TURBINE ENGINE COMMUNICATION DATA MANAGEMENT FUNCTION**
KOMMUNIKATIONSDATENVERWALTUNGSFUNKTION FÜR GASTURBINENMOTOREN
FONCTION DE GESTION DE DONNÉES DE COMMUNICATION DE TURBINE À GAZ

(30) Priority: 30.04.2021 US 202117245452
(43) Date of publication of application: 16.11.2022
(73) Proprietor: RTX Corporation, Farmington, CT 06032 (US)
(72) Inventor: SCHEID, Paul Raymond, West Hartford, CT 06107 (US); POSNIAK, Jason E., Broad Brook, CT 06016 (US)
(74) Representative: Dehns

(56) References cited:
- FR-A1- 3 053 140
- US-A1- 2015 212 952
- US-A1- 2018 046 515
- US-B2- 10 552 368

## Description

The subject matter disclosed herein generally relates to gas turbine engine communication systems and, more particularly, to a gas turbine engine communication data management function.

A control system of a gas turbine engine uses multiple configuration control items, such as control software, engine bill of materials (BOM) configuration data, trim updatable values, and the like to control the operation of the gas turbine engine and monitor the performance of the gas turbine engine. Once a gas turbine engine is deployed in the field, it can be difficult to access data captured and/or computed by the control system and to make updates to the configuration control items. A gas turbine engine can be deployed in the field for extended service life, such as a period of decades. Computer system technology and communication technology can evolve at a rapid pace adding to the challenges of interfacing with offboard systems as the offboard technology continues to advance during the lifespan of the engine.

US 2018/0046515 A1 discloses a control system manager for a power plant system that includes a gas turbine. The control system manager may comprise a multi core processor.

US 10552368 B2 discloses an in vehicle control device comprising a multi core processor, and a method of sending data between the cores of the multi core processor.

US 2015/0212952 A1 discloses a multi core processor having at least two different cores with different safety levels
According to a first aspect, there is provided a method for assigning tasks to processing cores of a multi-core processor associated with a gas turbine engine according to claim 1

Optionally, the first safety level is selected from a plurality of safety levels defined by a design assurance level, and the second safety level is selected from the plurality of safety levels defined by the design assurance level.

Optionally, the first type of tasks are engine control tasks to control the gas turbine engine, and the second type of tasks are data management tasks.

Optionally, the first type of tasks are engine protection tasks to protect an aspect of a gas turbine engine, and the second type of tasks are data management tasks.

Optionally, the second type of tasks are data management tasks.

Optionally, the data management tasks identify which of a plurality of parameters to record about a gas turbine engine.

Optionally, the data management tasks receive engine data from a sensor associated with the gas turbine engine.

Optionally, the data management tasks package the engine data for retransmission to a ground station.

Optionally, the data management tasks receive updated data from a ground station.

Optionally, the first processing core is prevented from executing the second core task, and the second processing core is prevented from executing the first core task.

Optionally, the first processing core is associated with a first core memory, and the second processing core is associated with a second core memory.

Optionally, the first processing core is prevented from accessing the second core memory, and the second processing core is prevented from accessing the first core memory.

According to another aspect, an engine control system according to claim 10 is provided.

Optionally, the first safety level is selected from a plurality of safety levels defined by a design assurance level, and the second safety level is selected from the plurality of safety levels defined by the design assurance level.

Optionally, the first type of tasks are engine control tasks to control an aspect of the gas turbine engine, and the second type of tasks are data management tasks.

Optionally, the first type of tasks are engine protection tasks to protect an aspect of a gas turbine engine, and the second type of tasks are data management tasks.

Optionally, the second type of tasks are data management tasks.

Optionally, the system further comprises a first core memory associated with the first processing core, and a second core memory associated with the second processing core.

Optionally, the first processing core is prevented from accessing the second core memory, and the second processing core is prevented from accessing the first core memory.

According to another aspect, a gas turbine engine is provided. The gas turbine engine includes a fan section comprising a fan case and an engine control system in accordance with the appended claims mounted on the fan case.

A technical effect of one or more of these embodiments is achieved by incorporating communication features to securely interface an engine control system with offboard systems as described herein.

The following descriptions should not be considered limiting in any way. With reference to the accompanying drawings, like elements are numbered alike:
FIG. 1 is a partial cross-sectional view of a gas turbine engine;
FIG. 2A is a block diagram of a system supporting wireless communication between an engine and offboard systems;
FIG. 2B is a block diagram illustrating further details of the system of FIG. 2A;
FIG. 2C is a block diagram of the processing circuitry of the engine control of FIG. 2B; and
FIG. 3 is a flow chart illustrating a method for assigning tasks to processors of a multi-core processor associated with a gas turbine engine.

A detailed description of one or more embodiments of the disclosed apparatus, system, and method are presented herein by way of exemplification and not limitation with reference to the Figures.

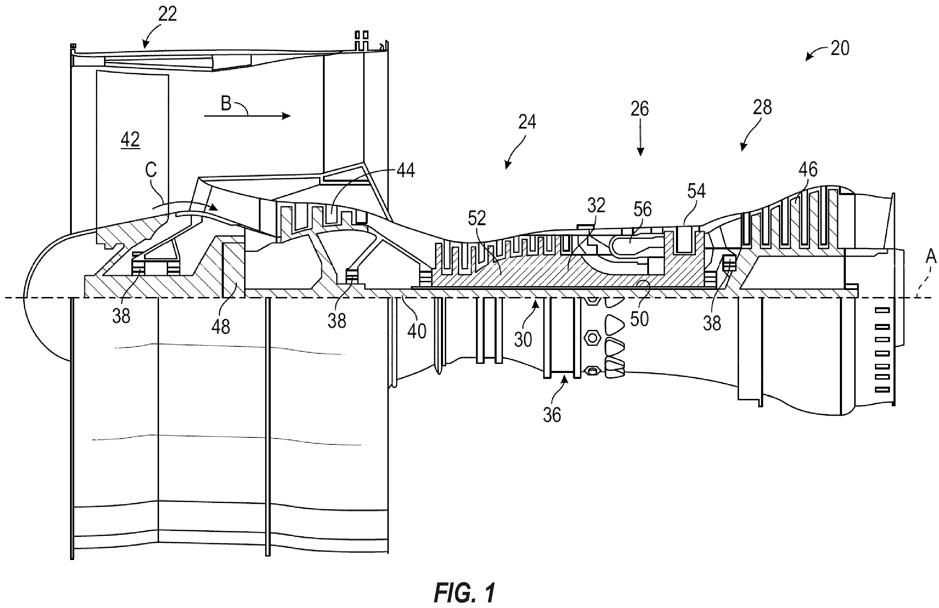

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]0.5. The "Low corrected fan tip speed" as disclosed herein according to one non-limiting embodiment is less than about 1150 ft/second (350.5 m/sec).

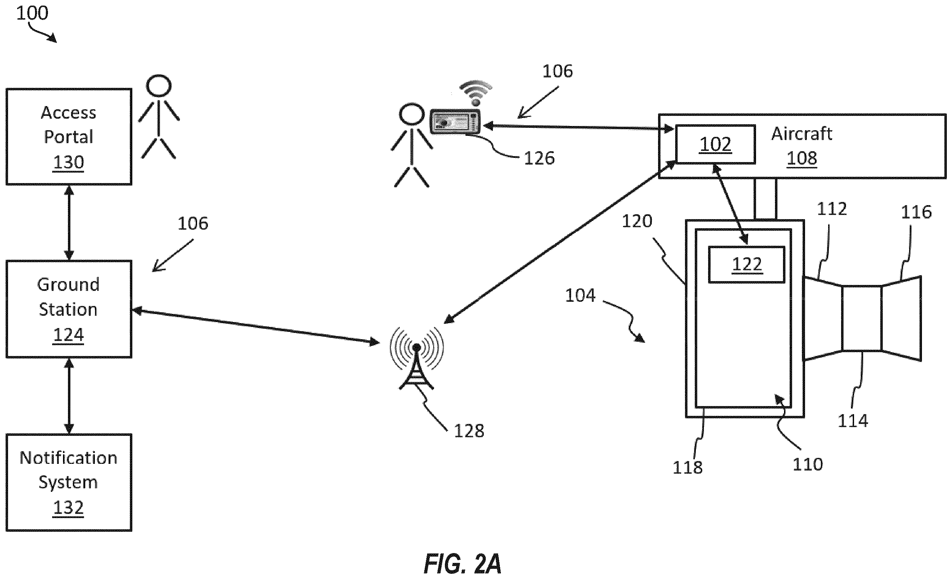

Referring now to the drawings, FIG. 2A illustrates a system 100 supporting wireless communication between a communication unit 102 (i.e., an aircraft wireless gateway) of a gas turbine engine 104 and a plurality of offboard systems 106. The gas turbine engine 104 can be coupled to an aircraft 108, where the aircraft 108 can include multiple instances of the gas turbine engine 104. The gas turbine engine 104 can include a fan section 110, a compressor section 112, a combustor section 114, and a turbine section 116. The fan section 110 drives air along a bypass flow path, while the compressor section 112 drives air along a core flow path for compression and communication into the combustor section 114 then expansion through the turbine section 116. A fan case 118 of the fan section 110 can be covered by a cowling 120 and may provide an installation surface that is cooler than other sections 112-116 of the gas turbine engine 104.

An engine control 122 can be mounted on the fan case 118 and covered by the cowling 120. The engine control 122 is configured to monitor and control the operation of the gas turbine engine 104 in real-time. To transfer configuration items, such as programs and data to and from the engine control 122, contemporary systems typically require that the cowling 120 is opened and multiple cables of bundled wires are coupled to the engine control 122. Such a process can ensure deliberate actions are taken in extracting data and performing updates to the engine control 122; however, the process can be slow and require large lengths of customized cables. In embodiments, the communication unit 102, also referred to as an aircraft wireless gateway. The communication unit 102 provides for communication between the aircraft 108 and the ground station 124. Particularly, the communication unit 102 provides for engine data about the gas turbine engine 104 to be sent from the engine control 122 to the ground station 124; the communication unit 102 also provides for data (e.g., a software update) to be sent from the ground station 124 to the engine control 122. Similar to the engine control 122, the communication unit 102 can be mounted on the fan case 118 and covered by the cowling 120 of the gas turbine engine 104. The communication unit 102 performs data management functions, such as receiving engine data from the engine control 122, packaging the data for retransmission by associating the engine data with a unique identifier (i.e., a header), and transmitting the data to the ground station 124 via the aircraft communication unit 102 using the header. Wireless communication can alleviate the need for customized cables or physically opening the cowling 120 to establish communication with the offboard systems 106.

In examples, the engine data includes full flight data, fault data, event reports, etc. Data can also be uploaded to the engine control 122, for example, to load software, trims, configuration information to support upgrades of the gas turbine engine 104 (and/or its sub-systems/components).

The offboard systems 106 can include, for example, a ground station 124, a near-wing maintenance computer 126, an access portal 130, and/or other devices (not depicted) that may establish one-way or two-way wireless communication with the communication unit 102. For example, a global positioning system (GPS) can provide one-way wireless signaling to the communication unit 102 to assist in confirming a geographic location of the gas turbine engine 104 while the communication unit 102 is coupled to the gas turbine engine 104. Wireless communication performed by the communication unit 102 can be through a variety of technologies with different ranges supported. As one example, the communication unit 102 can support Wi-Fi (e.g., radio wireless local area networking based on IEEE 802.11 or other applicable standards), GPS, cellular networks, satellite communication, and/or other wireless communication technologies known in the art. Wireless communication between the aircraft communication unit 102 and the offboard systems 106 can be direct or indirect. For instance, wireless communication between the communication unit 102 and ground station 124 may pass through one or more network interface components 128, such as a repeater, while wireless communication between the communication unit 102 and the near-wing maintenance computer 126 may be direct wireless communication without any relay components.

The ground station 124 can provide for communication with a variety of support systems, such as an access portal 130 that provides for authorized users to access data, initiate tests, configure software, and perform other actions with respect to the engine control 122, where the communication unit 102 acts as a secure gateway to limit access and interactions with the engine control 122. As another example, the ground station 124 can communicate with a notification system 132, which may trigger alerts, text messages, e-mails, and the like to authorized recipients regarding the operational status of the gas turbine engine 104. The near-wing maintenance computer 126 may provide an authorized user with limited authority a capability to query the communication unit 102 for fault data, test parameters, and other such information. In some embodiments, the near-wing maintenance computer 126 can be authorized with limited authority to make updates to select configuration parameters or data collection parameters of the communication unit 102.

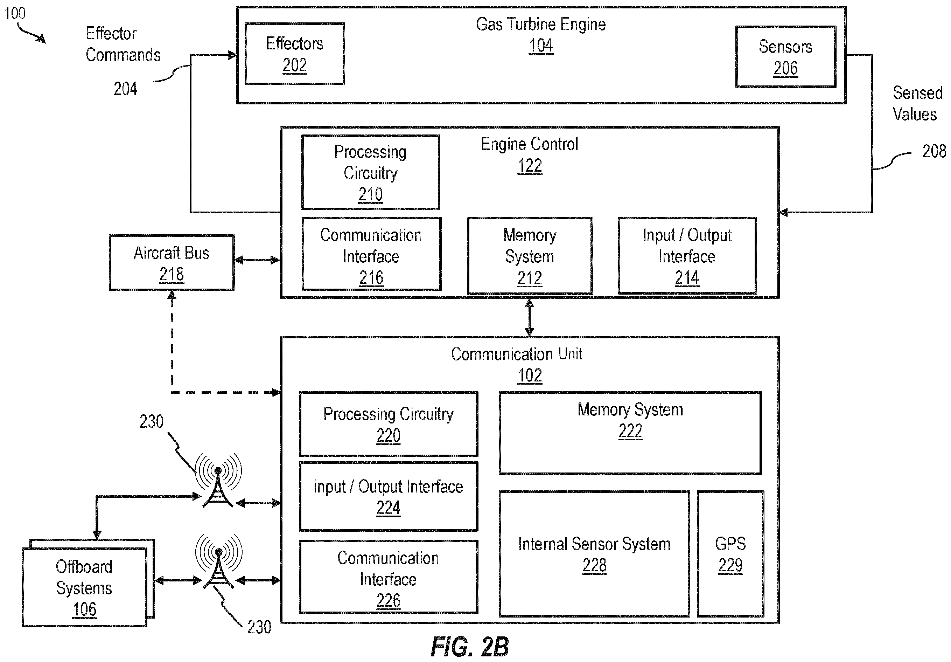

FIG. 2B is a block diagram illustrating further details of the system 100 of FIG. 2A, in accordance with an embodiment of the disclosure. The engine control 122 can control effectors 202 of the gas turbine engine 104 by generating one or more effector commands 204. Examples of effectors 202 can include one or more motors, solenoids, valves, relays, pumps, heaters, and/or other such actuation control components. A plurality of sensors 206 can capture state data associated with the gas turbine engine 104 and provide sensed values 208 as feedback to the engine control 122 to provide for closed-loop control of the gas turbine engine 104 according to one or more control laws. Examples of the sensors 206 can include one or more temperature sensors, pressure sensors, strain gauges, speed sensors, accelerometers, lube sensors, and the like.

The engine control 122 can be a full authority digital engine control that includes processing circuitry 210 and a memory system 212 configured to store a plurality of configuration items, where at least one of the configuration items includes a sequence of the computer executable instructions for execution by the processing circuitry 210. Other types of configuration items can include data, such as constants, configurable data, and/or fault data. Examples of computer executable instructions can include boot software, operating system software, and/or application software. The executable instructions may be stored or organized in any manner and at any level of abstraction, such as in connection with controlling and/or monitoring operation of the gas turbine engine 104. The processing circuitry 210 can be any type or combination of central processing unit (CPU), including one or more of: a microprocessor, a digital signal processor (DSP), a microcontroller, an application specific integrated circuit (ASIC), a field programmable gate array (FPGA), or the like. Also, in embodiments, the memory system 212 may include volatile memory, such as random access memory (RAM), and non-volatile memory, such as Flash memory, read only memory (ROM), and/or other electronic, optical, magnetic, or any other computer readable medium onto which is stored data and algorithms in a non-transitory form.

The engine control 122 can also include one or more of an input/output interface 214, a communication interface 216, and/or other elements (not depicted). The input/output interface 214 can include support circuitry for interfacing with the effectors 202 and sensors 206, such as filters, amplifiers, digital-to-analog converters, analog-to-digital converters, and other such circuits to support digital and/or analog interfaces. Further, the input/output interface 214 can receive or output signals to/from other sources. The communication interface 216 can be communicatively coupled to the communication unit 102. The communication interface 216 may also communicate with an aircraft bus 218 of the aircraft 108 of FIG. 2A. The aircraft bus 218 may provide aircraft-level parameters and commands that are used by the engine control 122 to control the gas turbine engine 104 in real-time.

The engine control 122 implements data management functionality, such as receiving engine data from one or more sensors associated with the gas turbine engine 104, packaging the engine data into packaged engine data by associating a header with engine data, and providing for the packaged data to be transmitted to the communication unit 102. The communication unit 102 acts as a gateway to relay data between the engine control 122 and the offboard systems 106.

Similar to the engine control 122, the communication unit 102 can include processing circuitry 220, a memory system 222, an input/output interface 224, and a communication interface 226. The processing circuitry 220 can be any type or combination of central processing unit (CPU), including one or more of: a microprocessor, a digital signal processor (DSP), a microcontroller, an application specific integrated circuit (ASIC), a field programmable gate array (FPGA), or the like. Also, in embodiments, the memory system 222 may include volatile memory, such as random access memory (RAM), and non-volatile memory, such as Flash memory, read only memory (ROM), and/or other electronic, optical, magnetic, or any other computer readable medium onto which is stored data and algorithms in a non-transitory form. According to one or more embodiments described herein, the communication unit 102 can also include an internal sensor system 228. The internal sensor system 228 can include, for example, one or more accelerometers, gyroscopes, barometers, a magnetometer (e.g., a compass), and other such sensors. Further, the communication unit 102 can include other devices, such as a GPS 229. The input/output interface 224 can process data collected from the internal sensor system 228 and condition the data in a format usable by the processing circuitry 220. The communication interface 226 can interface with one or more antennas 230, which may be integrated with the communication unit 102 or located remotely from the communication unit 102, e.g., a shark-fin antenna mounted under or on the cowling 120 of FIG. 2A.

The communication unit 102 can act as a communication relay between the engine control 122 and the offboard systems 106. For example, the offboard systems 106 can request to load new/updated configuration items to the memory system 212 of the engine control 122 through the communication unit 102. The communication interface 216 of the engine control 122 can interface to the communication interface 226 of the communication unit 102 through a wired, wireless, optical, or magnetic coupling. The communication interface 226 can communicate wirelessly through one or more antennas 230 to the offboard systems 106. The communication interface 226 may also have access to receive data directly from the aircraft bus 218 in some embodiments. In alternate embodiments, the communication unit 102 can relay engine data (e.g., the sensed values 208) from the engine control 122 to the offboard systems 106 to make the engine data available remotely from the aircraft 108 (e.g., to an airline, to an engine original equipment manufacturer, to an airframer, etc.). According to one or more embodiments described herein, the communication interface 216 and the communication interface 226 communicate using a trivial file transfer protocol (TFTP), although other suitable protocols can be used.

According to one or more embodiments described herein, the communication unit 102 is used to form a wireless local area network (LAN) connection between an aircraft LAN associated with the aircraft 108 and a ground-based LAN associated with the offboard systems 106. The communication unit 102 bridges these two LANs using, for example, the IEEE 802.11 family of standards and cellular communication. The communication unit 102 operates independent of LAN protocols and supports representative functionality, such as file server access from aircraft terminals, terminal emulation sessions to a ground-based host, file transfers, and Internet access.

The communication unit 102 can manage credentials and user authentication to limit access to the memory system 212 of the engine control 122. User authentication can be defined for particular users or classes of users, such as equipment-owner users, maintenance technicians, engineering users, and the like. For example, a maintenance technician may have the authority to adjust trimmable constants or reprogram certain regions of the memory system 212. An engineering user may have authority to reprogram an operating system, boot program code, or application software in the memory system 212, in addition to having permissions of the maintenance technician and the equipment-owner user. If user authentication fails, for instance, by user credentials not being recognized with respect to user authentication data, then the communication unit 102 can block access of the offboard systems 106 from reading from or writing to the memory system 212.

Configuration items received for the engine control 122 and/or the communication unit 102 may be encrypted using various cryptographic methods to further enhance security. For example, the communication unit 102 can apply a cryptographic algorithm using one or more parameters received and cryptographic information to decrypt an encrypted configuration item. A combination of transmitted and stored cryptographic information can be used together for decryption based on 'shared secrets' such that not all of the information is sent from the offboard systems 106 nor stored completely within the communication unit 102. After decryption, the authenticity of the configuration item can be verified using, for example, a digital signature of the configuration item. The resulting file can be a decrypted and authenticated configuration item, which may be temporarily stored in memory system 222 or otherwise buffered during authentication and passed to the engine control 122 upon authentication.

Separating the communication unit 102 from the engine control 122 can provide for the communication unit 102 and the engine control 122 to have different expected service life durations. For example, to stay compatible with changes in wireless communication technologies used by the offboard systems 106, the communication unit 102 may be upgraded at a faster interval than the engine control 122. The communication unit 102 can have a lower processing and storage capacity than the engine control 122 to reduce power requirements, weight, and other costs associated with the communication unit 102. Since the communication unit 102 does not actively control the gas turbine engine 104, development cycles may be reduced as compared to implementing flight-critical control algorithms and hardware of the engine control 122.

Further, separating the communication unit 102 from the engine control 122 provides for the engine control 122 to communicate with the offboard systems 106 via existing communications infrastructure available on the aircraft 108. For example, the communication unit 102 can be an existing communication unit 102, such as used to provide for passenger WiFi, infotainment, etc., on the aircraft. Thus, the engine control 122 can utilize the existing communications infrastructure to transmit engine data to the offboard systems 106 and/or to receive software updates, etc., from the offboard systems 106. To do this, the engine control 122 or the offboard systems 106 associates a header with data transmitted between the engine control 122 and the offboard systems 106. According to an example, the header is associated with the engine data by creating a packet that includes the engine data and uses the header as a packet header (e.g., the packet header portion of an Internet Protocol (IP) packet). In some cases, depending on the amount/size of engine data, the engine control 122 may divide the engine data into multiple packets, each of the multiple packets having the header.

The header provides a unique identifier that identifies a source of the transmission and a destination for the transmission. That is, the header contains addressing information and other data used to deliver the engine data associated with the header to its intended destination (e.g., the offboard systems 106). As one example, the header defines comprises a source system identifier, a delivery destination identifier, and a report identifier. The source system identifier identifies the source of the transmission (e.g., a unique identifier associated with a particular engine control such as the engine control 122). The delivery destination identifier identifies a destination to receive the transmission (e.g., a unique identifier associated with a particular airline system such as the ground station 124). The report identifier defines a type of report to which the data relate. The type of report can be associated with a segment of a flight plan. For example, a report about a takeoff event is identified with a takeoff identifier, a report about a landing event is identified with a landing identifier, a report about a climb event is identified with a climb identifier, etc.

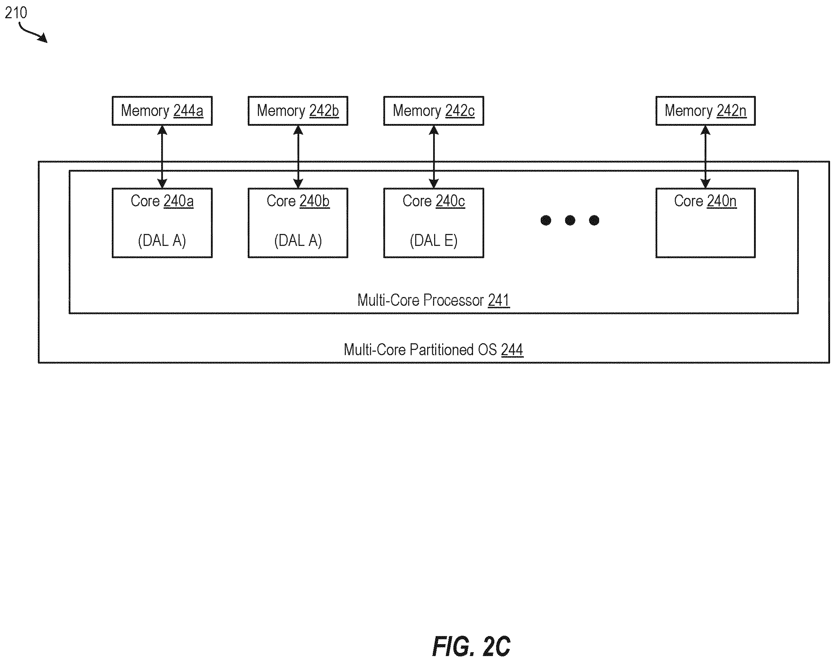

FIG. 2C is a block diagram of the processing circuitry 210 of the engine control 122 of FIG. 2B according to one or more embodiments described herein. As shown in the example of FIG. 2C, the processing circuitry 210 can include multiple processing cores (or simply "cores"): core 240a, core 240b, core 240c, ... core 240n (collectively referred to as "cores 240").

In some cases, it may be desirable to use multiple processing cores to manage various tasks performed by the engine control 122, such as engine control, engine protection, and data management (including communication) functions.

The design shown in FIG. 2C, including variants thereof, provides for one of the cores 240 to be used as a data acquisition and wireless communication gateway processor (also referred to as a "data management"). The wireless communication can be local within the engine control 122, to the gas turbine engine 104, and/or to the communication unit 102. The cores 240 are part of a multi-core processor 241 and run on top of a multi-core partitioned operating system (OS) 244. This allows for integration into data streams existing within the engine control 122 while being isolated from interfering with other functions (e.g., engine control functions) performed by the engine control 122. In examples, each of the cores 240 is associated with a dedicated memory. For example, the core 240a is associated with a memory 242a (a "first core memory", the core 240b is associated with a memory 242b (a "second core memory"), the core 240c is associated with a memory 242c (a "third core memory", ... and the core 240n is associated with a memory 242n (an "nth core memory").

According to one or more embodiments described herein, the cores 240 are assigned or associated with a particular type of task. For example, the core 240a is assigned to be a control core, which is responsible for executing engine control instructions that control the gas turbine engine 104. The core 240b is assigned to be an engine protection core, which is responsible for monitoring engine parameters and taking actions to protect the gas turbine engine. For example, the engine protection core (i.e., core 240b) can monitor an engine for overspeed and impose rules/limits to reduce or prevent overspeed. The core 240c is assigned to be a data management core, which provides data management functions. According to an example, data management functions can include receiving or collecting data about the engine, packaging the data to include a header as described herein, and transmitting the data, such as to the offboard systems 106 via the communication unit 102. It should be appreciated that additional or fewer cores can be implement (see, e.g., the core 240n).

In one or more examples, the type of tasks that a processor is assigned can be associated with a particular safety level, also referred to as a design assurance level (DAL) as defined by RTCA DO-178C, a software considerations in airborne systems and equipment certification. The safety level is based on how critical a particular system to safety of the aircraft 108. For example, the control core (i.e., core 240a) and/or the engine protection core (i.e., core 240b) are considered higher safety level cores (DAL A) than the data management core (i.e., core 240c) (DAL E).

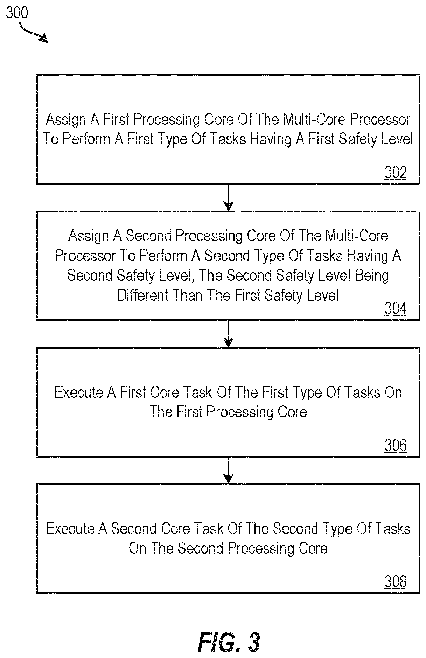

Referring now to FIG. 3 with continued reference to FIGS. 1 and 2, FIG. 3 is a flow chart illustrating a method 300 for using the engine control 122 of FIG. 2A according to one or more embodiments described herein. The method 300 may be performed, for example, by the engine control 122 of FIG. 2A and at least one of the offboard systems 106 of FIG. 2A.

At block 302, a first processing core (e.g., the core 240a) of the multi-core processor is assigned to perform a first type of tasks having a first safety level. At block 304, a second processing core (e.g., the core 240c) of the multi-core processor is assigned to perform a second type of tasks having a second safety level. The second safety level differs from the first safety level. The first safety level and the second safety level can be selected from multiple safety levels, such as the safety levels (or DAL) as defined by RTCA DO-178C. For example, the first safety level can be a level A safety level while the second safety level can be a level B safety level. In an example in which the first type of tasks are engine control tasks, the first safety level may be a level A. FIG. 2C shows the example in which the core 240a is assigned a DAL A level because it is assigned engine control tasks. Similarly, in an example in which the first type of tasks are engine protection tasks, the first safety level may be a level A. FIG. 2C shows the example in which the core 240b is assigned a DAL A level because it is assigned engine protection tasks. In the case of either example, the second plurality of tasks may have a second, lower level. For example, if the second type of tasks are data management tasks, the safety level may be other than the level A (e.g., level E). FIG. 2C shows the example in which the core 240c is assigned a DAL E safety level because it is assigned data management tasks. It should be appreciated that a core assigned the data management tasks can be assigned a different safety level than DAL E. It should also be appreciated that how data is used, such as on the ground, can determine its safety level (DAL). For example, if the data that is collected is used for extending the life of life limited parts (LLPs), this could be a DAL C safety level because if the data was wrong, it could lead to a miscalculation of life that could cause a critical engine part failing early, which in turn affects the safety of the aircraft.

Data management tasks can be various types of tasks associated with monitoring and controlling operation of the gas turbine engine 104 in real-time. For example, the data management tasks can include receiving engine data (e.g., one or more sensed values 208) from a sensor (e.g., one or more of the sensors 206) associated with the gas turbine engine 104. In some examples, the data management tasks can include packaging the engine data for retransmission to a ground station (e.g., one or more of the offboard systems 106), such as by associating a header with the engine data. In other examples, the data management tasks can be receiving updated data (e.g., to load software, trims, configuration information to support upgrades of the gas turbine engine 104 (and/or its sub-systems/components)) from a ground station (e.g., one or more of the offboard systems 106). In some examples, the data management can include identifying which of multiple parameters to record about a gas turbine engine and when to record data about those parameters.

According to examples, the first processing core (e.g., the core 240a) is prevented from executing the second core tasks. Likewise, the second processing core (e.g., the core 240c) is prevented from executing the first core tasks. This prevents cores with higher safety level levels from being assigned lower safety level tasks.

At block 306, the first processing core (e.g., the core 240a) executes a first core task of the first type of tasks. Similarly, at block 308, the second processing core (e.g., the core 240c) executes a second core task of the second type of tasks. That is, the processing cores 240a, 240c process tasks having a type as assigned to that processing core. This also applies to the other cores 240n.

While the above description has described the flow process of FIG. 3 in a particular order, it should be appreciated that unless otherwise specifically required in the attached claims that the ordering of the steps may be varied.

An advantage of one or more of the techniques described herein includes uploading data to the engine control 122 to load software, trims, configuration information to support upgrades of the gas turbine engine 104, etc. Another advantage of one or more of the techniques described herein is that the present techniques support local maintenance work at the gas turbine engine 104 to support real-time troubleshooting, engine ground power assurance tests, and functional checkout of engine component changes. Another advantage of one or more of the techniques described herein is that the data management cores can tap into a data stream of the engine control 122 more easily through the multi-core partitioned OS 244. This removes the burden to have a dedicated software to communicate with an external data management unit. Yet another advantage of one or more of the techniques described herein is added security because the multi-core partitioned OS 244 firewalls off instances of engine control and/or engine protection, for example, from the data management functions, unless explicitly allowed. Another advantage of one or more of the techniques described is that data is separated by using separate memories per processing core, which increases data security. Yet advantage of one or more of the techniques described is that using one of the cores 240 to perform data management instead of a conventional stand-alone data management unit significantly increases the amount engine data that can be collected, managed, and reported (for example, from a few hundred data points to tens of thousands of data points).

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention, as defined by the claims. In addition, many modifications may be made to adapt a particular situation or material to the teachings of the present disclosure without departing from the scope of the claims. Therefore, it is intended that the present invention not be limited to the particular embodiment disclosed as the best mode contemplated for carrying out this present invention, but that the present invention will include all embodiments falling within the scope of the claims.

## Claims

1. A method for assigning tasks to processing cores of a multi-core processor (241) associated with a gas turbine engine (104) comprising:
assigning a first processing core (240a) of the multi-core processor to perform a first type of tasks having a first safety level;
assigning a second processing core (240c) of the multi-core processor to perform a second type of tasks having a second safety level, the second safety level being different than the first safety level;
executing a first core task of the first type of tasks on the first processing core; and
executing a second core task of the second type of tasks on the second processing core;
the second core task including collecting data about the engine, packaging the collected data to include a header indicating an offboard system (106) remotely located from the gas turbine engine as a destination to receive the collected data, and control a communication unit (102) to wirelessly transmit the collected data to the offboard system (106) according to the header.

2. The method of claim 1, wherein the first safety level is selected from a plurality of safety levels defined by a design assurance level, and wherein the second safety level is selected from the plurality of safety levels defined by the design assurance level.

3. The method of claim 1 or 2, wherein the second type of tasks are data management tasks.

4. The method of claim 3, wherein the first type of tasks are one of engine control tasks to control the gas turbine engine (104), or engine protection tasks to protect an aspect of a gas turbine engine.

5. The method of claim 3 or 4, wherein the data management tasks identify which of a plurality of parameters to record about a gas turbine engine (104).

6. The method of claim 3, 4 or 5, wherein the data management tasks receive engine data from a sensor associated with the gas turbine engine,
optionally wherein the data management tasks package the engine data for retransmission to a ground station (106).

7. The method of any of claims 3 to 6, wherein the data management tasks receive updated data from a ground station.

8. The method of any preceding claim, wherein the first processing core (240a) is prevented from executing the second core task, and wherein the second processing core (240c) is prevented from executing the first core task.

9. The method of any preceding claim, wherein the first processing core (240a) is associated with a first core memory (242a), and wherein the second processing core (240c) is associated with a second core memory (242c),
optionally wherein the first processing core (240a) is prevented from accessing the second core memory (242c), and wherein the second processing core (240c) is prevented from accessing the first core memory (242a).

10. An engine control system mounted on a fan case (118), the engine control system configured to monitor and control operation of a gas turbine engine (104) in real-time, the engine control system comprising a multi-core processor (241), the multi-core processor comprising:
a first processing core (240a) assigned to perform a first type of tasks having a first safety level and to execute a first task of the first type of tasks on the first processing core; and
a second processing core (240c) assigned to perform a second type of tasks having a second safety level, the second safety level being different than the first safety level, and to execute a second task of the second type of tasks on the second processing core;
wherein the second task includes collecting data about the engine, packaging the collected data to include a header indicating an offboard system (106) remotely located from the gas turbine engine as a destination to receive the collected data, and control a communication unit (102) to wirelessly transmit the collected data to the offboard system (106) according to the header.

11. The engine control system of claim 10, wherein the first safety level is selected from a plurality of safety levels defined by a design assurance level, and wherein the second safety level is selected from the plurality of safety levels defined by the design assurance level.

12. The engine control system of claim 10 or 11 wherein the second type of tasks are data management tasks.

13. The engine control system of claim 12, wherein the first type of tasks are one of engine control tasks to control an aspect of the gas turbine engine (104), or engine protection tasks to protect an aspect of a gas turbine engine.

14. The engine control system of any of claims 10 to 13, further comprising:
a first core memory (242a) associated with the first processing core (240a); and
a second core memory (242c) associated with the second processing core (240c),
optionally, wherein the first processing core (240a) is prevented from accessing the second core memory (242c), and wherein the second processing core (240c) is prevented from accessing the first core memory (242a).

15. A gas turbine engine comprising:
a fan section (110) comprising a fan case (118); and
the engine control system of any of claims 10 to 14 mounted on the fan case.

## Patentansprüche

1. Verfahren zum Zuweisen von Aufgaben zu Prozessorkernen eines Mehrkernprozessors (241), der mit einem Gasturbinenmotor (104) assoziiert ist, umfassend:
Zuweisen eines ersten Prozessorkerns (240a) des Mehrkernprozessors, um eine erste Art von Aufgaben mit einem ersten Sicherheitsniveau durchzuführen;
Zuweisen eines zweiten Prozessorkerns (240c) des Mehrkernprozessors, um eine zweite Art von Aufgaben mit einem zweiten Sicherheitsniveau durchzuführen, wobei das zweite Sicherheitsniveau von dem ersten Sicherheitsniveau verschieden ist;
Ausführen einer ersten Kernaufgabe der ersten Art von Aufgaben auf dem ersten Prozessorkern; und
Ausführen einer zweiten Kernaufgabe der zweiten Art von Aufgaben auf dem zweiten Prozessorkern;
wobei die zweite Kernaufgabe das Sammeln von Daten über den Motor, das Verpacken der gesammelten Daten, um einen Header zu beinhalten, der ein Offboard-System (106), das entfernt von dem Gasturbinenmotor angeordnet ist, als ein Ziel zum Empfangen der gesammelten Daten angibt, und das Steuern einer Kommunikationseinheit (102), um die gesammelten Daten gemäß dem Header drahtlos an das Offboard-System (106) zu übertragen, einschließt.

2. Verfahren nach Anspruch 1, wobei das erste Sicherheitsniveau aus einer Vielzahl von Sicherheitsniveaus ausgewählt ist, die durch ein Design Assurance Level definiert sind, und wobei das zweite Sicherheitsniveau aus der Vielzahl von Sicherheitsniveaus ausgewählt ist, die durch das Design Assurance Level definiert sind.

3. Verfahren nach Anspruch 1 oder 2, wobei die zweite Art von Aufgaben Datenverwaltungsaufgaben sind.

4. Verfahren nach Anspruch 3, wobei die erste Art von Aufgaben eine von Motorsteuerungsaufgaben zum Steuern des Gasturbinenmotors (104) oder Motorschutzaufgaben zum Schützen eines Aspekts eines Gasturbinenmotors sind.

5. Verfahren nach Anspruch 3 oder 4, wobei die Datenverwaltungsaufgaben identifizieren, welcher einer Vielzahl von Parametern über einen Gasturbinenmotor (104) aufgezeichnet werden soll.

6. Verfahren nach Anspruch 3, 4 oder 5, wobei die Datenverwaltungsaufgaben Motordaten von einem Sensor empfangen, der mit dem Gasturbinenmotor assoziiert ist,
optional wobei die Datenverwaltungsaufgaben die Motordaten zur Weiterleitung an eine Bodenstation (106) verpacken.

7. Verfahren nach einem der Ansprüche 3 bis 6, wobei die Datenverwaltungsaufgaben aktualisierte Daten von einer Bodenstation empfangen.

8. Verfahren nach einem der vorhergehenden Ansprüche, wobei der erste Prozessorkern (240a) daran gehindert wird, die zweite Kernaufgabe auszuführen, und wobei der zweite Prozessorkern (240c) daran gehindert wird, die erste Kernaufgabe auszuführen.

9. Verfahren nach einem der vorhergehenden Ansprüche, wobei der erste Prozessorkern (240a) mit einem ersten Kernspeicher (242a) assoziiert ist, und wobei der zweite Prozessorkern (240c) mit einem zweiten Kernspeicher (242c) assoziiert ist,
optional wobei der erste Prozessorkern (240a) daran gehindert wird, auf den zweiten Kernspeicher (242c) zuzugreifen, und wobei der zweite Prozessorkern (240c) daran gehindert wird, auf den ersten Kernspeicher (242a) zuzugreifen.

10. Motorsteuerungssystem, das an einem Lüftergehäuse (118) montiert ist, wobei das Motorsteuerungssystem konfiguriert ist, den Betrieb eines Gasturbinenmotors (104) in Echtzeit zu überwachen und zu steuern, wobei das Motorsteuerungssystem einen Mehrkernprozessor (241) umfasst, wobei der Mehrkernprozessor umfasst:
einen ersten Prozessorkern (240a), der zugewiesen ist, um eine erste Art von Aufgaben mit einem ersten Sicherheitsniveau durchzuführen und eine erste Aufgabe der ersten Art von Aufgaben auf dem ersten Prozessorkern auszuführen; und
einen zweiten Prozessorkern (240c), der zugewiesen ist, um eine zweite Art von Aufgaben mit einem zweiten Sicherheitsniveau durchzuführen, wobei das zweite Sicherheitsniveau von dem ersten Sicherheitsniveau verschieden ist, und um eine zweite Aufgabe der zweiten Art von Aufgaben auf dem zweiten Prozessorkern auszuführen;
wobei die zweite Aufgabe das Sammeln von Daten über den Motor, das Verpacken der gesammelten Daten, um einen Header zu beinhalten, der ein Offboard-System (106), das entfernt von dem Gasturbinenmotor angeordnet ist, als ein Ziel zum Empfangen der gesammelten Daten angibt, und das Steuern einer Kommunikationseinheit (102), um die gesammelten Daten gemäß dem Header drahtlos an das Offboard-System (106) zu übertragen, einschließt.

11. Motorsteuerungssystem nach Anspruch 10, wobei das erste Sicherheitsniveau aus einer Vielzahl von Sicherheitsniveaus ausgewählt ist, die durch ein Design Assurance Level definiert sind, und wobei das zweite Sicherheitsniveau aus der Vielzahl von Sicherheitsniveaus ausgewählt ist, die durch das Design Assurance Level definiert sind.

12. Motorsteuerungssystem nach Anspruch 10 oder 11, wobei die zweite Art von Aufgaben Datenverwaltungsaufgaben sind.

13. Motorsteuerungssystem nach Anspruch 12, wobei die erste Art von Aufgaben eine von Motorsteuerungsaufgaben zum Steuern eines Aspekts des Gasturbinenmotors (104) oder Motorschutzaufgaben zum Schützen eines Aspekts eines Gasturbinenmotors sind.

14. Motorsteuerungssystem nach einem der Ansprüche 10 bis 13, ferner umfassend:
einen ersten Kernspeicher (242a), der mit dem ersten Prozessorkern (240a) assoziiert ist; und
einen zweiten Kernspeicher (242c), der mit dem zweiten Prozessorkern (240c) assoziiert ist,
optional, wobei der erste Prozessorkern (240a) daran gehindert wird, auf den zweiten Kernspeicher (242c) zuzugreifen, und wobei der zweite Prozessorkern (240c) daran gehindert wird, auf den ersten Kernspeicher (242a) zuzugreifen.

15. Gasturbinenmotor, umfassend:
einen Lüfterabschnitt (110), der ein Lüftergehäuse (118) umfasst; und
das Motorsteuerungssystem nach einem der Ansprüche 10 bis 14, das an dem Lüftergehäuse montiert ist.

## Revendications

1. Procédé d'affectation de tâches aux noyaux de traitement d'un processeur multinoyau (241) associé à un moteur à turbine à gaz (104), comprenant :
l'affectation d'un premier noyau de traitement (240a) du processeur multinoyau à la réalisation d'un premier type de tâches ayant un premier niveau de sécurité ;
l'affectation d'un second noyau de traitement (240c) du processeur multinoyau à réaliser un second type de tâches ayant un second niveau de sécurité, le second niveau de sécurité étant différent du premier niveau de sécurité ;
l'exécution d'une première tâche noyau du premier type de tâches sur le premier noyau de traitement ; et
l'exécution d'une seconde tâche noyau du second type de tâches sur le second noyau de traitement ;
la seconde tâche noyau comporte la collecte des données sur le moteur, le regroupement des données collectées pour inclure un en-tête indiquant un système hors-bord (106) situé à distance du moteur à turbine à gaz comme destination pour recevoir les données collectées, et à commander une unité de communication (102) pour transmettre sans fil les données collectées au système hors-bord (106) en fonction de l'en-tête.

2. Procédé selon la revendication 1, dans lequel le premier niveau de sécurité est sélectionné parmi une pluralité de niveaux de sécurité définis par un niveau d'assurance de conception, et dans lequel le second niveau de sécurité est sélectionné parmi la pluralité de niveaux de sécurité définis par le niveau d'assurance de conception.

3. Procédé selon la revendication 1 ou 2, dans lequel le second type de tâches consiste en des tâches de gestion de données.

4. Procédé selon la revendication 3, dans lequel le premier type de tâches consiste en des tâches de commande du moteur pour commander le moteur à turbine à gaz (104), ou en des tâches de protection du moteur pour protéger un aspect d'un moteur à turbine à gaz.

5. Procédé selon la revendication 3 ou 4, dans lequel les tâches de gestion des données identifient lequel des paramètres d'une pluralité à enregistrer sur un moteur à turbine à gaz (104).

6. Procédé selon la revendication 3, 4 ou 5, dans lequel les tâches de gestion des données reçoivent des données moteur provenant d'un capteur associé au moteur à turbine à gaz, éventuellement dans lequel les tâches de gestion des données regroupent les données du moteur pour retransmission à une station au sol (106).

7. Procédé selon l'une quelconque des revendications 3 à 6, dans lequel les tâches de gestion des données reçoivent des données mises à jour provenant d'une station au sol.

8. Procédé selon une quelconque revendication précédente, dans lequel le premier noyau de traitement (240a) est empêché d'exécuter la seconde tâche noyau, et dans lequel le second noyau de traitement (240c) est empêché d'exécuter la première tâche noyau.

9. Procédé selon une quelconque revendication précédente, dans lequel le premier noyau de traitement (240a) est associé à une première mémoire noyau (242a), et dans lequel le second noyau de traitement (240c) est associé à une seconde mémoire noyau (242c),
éventuellement dans lequel le premier noyau de traitement (240a) est empêché d'accéder à la seconde mémoire noyau (242c), et dans lequel le second noyau de traitement (240c) est empêché d'accéder à la première mémoire noyau (242a).

10. Système de commande de moteur montée sur un carter de soufflante (118), le système de commande de moteur étant configurée pour surveiller et commander le fonctionnement du moteur à turbine à gaz (104) en temps réel, le système de commande de moteur comprenant un processeur multinoyau (241), le processeur multinoyau comprenant :
un premier noyau de traitement (240a) affecté à la réalisation d'un premier type de tâches ayant un premier niveau de sécurité et à l'exécution d'une première tâche du premier type de tâches sur le premier noyau de traitement ; et
un second noyau de traitement (240c) affecté à la réalisation d'un second type de tâches ayant un second niveau de sécurité, le second niveau de sécurité étant différent du premier niveau de sécurité, et à l'exécution d'une seconde tâche du second type de tâches sur le second noyau de traitement ;
dans lequel la seconde tâche comporte la collecte des données sur le moteur, le regroupement des données collectées pour inclure un en-tête indiquant un système hors-bord (106) situé à distance du moteur à turbine à gaz comme destination pour recevoir les données collectées, et à commander une unité de communication (102) pour transmettre sans fil les données collectées au système hors-bord (106) en fonction de l'en-tête.

11. Système de commande de moteur selon la revendication 10, dans lequel le premier niveau de sécurité est sélectionné parmi une pluralité de niveaux de sécurité définis par un niveau d'assurance de conception, et dans lequel le second niveau de sécurité est sélectionné parmi la pluralité de niveaux de sécurité définis par le niveau d'assurance de conception.

12. Système de commande de moteur selon la revendication 10 ou 11, dans lequel le second type de tâches est constitué de tâches de gestion de données.

13. Système de commande de moteur selon la revendication 12, dans lequel le premier type de tâches consiste en des tâches de commande du moteur pour commander un aspect du moteur à turbine à gaz (104), ou en des tâches de protection du moteur pour protéger un aspect d'un moteur à turbine à gaz.

14. Système de commande de moteur selon l'une quelconque des revendications 10 à 13, comprenant également :
une première mémoire noyau (242a) associée au premier noyau de traitement (240a) ; et
une seconde mémoire noyau (242c) associée au second noyau de traitement (240c),
éventuellement dans lequel le premier noyau de traitement (240a) est empêché d'accéder à la seconde mémoire noyau (242c), et dans lequel le second noyau de traitement (240c) est empêché d'accéder à la première mémoire noyau (242a).

15. Moteur à turbine à gaz comprenant :
un carter de soufflante (110) comprenant un carter de soufflante (118) ; et
le système de commande de moteur de l'une quelconque des revendications 10 à 14 monté sur le carter de soufflante.
